# EUROPEAN PATENT APPLICATION

(11) **EP 4 723 493 A1**
(43) Date of publication of application: **08.04.2026**
(21) Application number: 24204967.4
(22) Date of filing: 07.10.2024
(51) Int. Cl.: H04B 3/00

(54) **SYSTEM AND METHOD FOR AUTOMOTIVE COMMUNICATION DEVICE WITH VOLTAGE SHIFTING MODULE**

(71) Applicant: ZF CV Systems Global GmbH, 3006 Bern (CH)
(72) Inventor: KOLT, Mateusz, 53-228 Wroclaw (PL)
(74) Representative: Copi, Joachim

(57) **Abstract**

The invention relates to a communication device (10) for automotive communication, comprising a microcontroller (12) for generating a microcontroller output signal (14) and receiving a microcontroller input signal (16. The microcontroller output signal and the microcontroller input signal respectively indicate a voltage (18a, 18b) with respect to a first ground potential (20). Further the, communication device (10) comprises a bus transceiver (22) for generating a bus signal (24) depending on a transceiver input signal (26) which depends on the microcontroller output signal (14) and for observing the bus signal (24) for providing a transceiver output signal (28) depending on the bus signal (24). The transceiver input signal (26) and the transceiver output signal (28) respectively indicate a voltage (30a, 30b) to a second ground potential (32). Moreover the communication device (10) comprises a shifting module (34) for detecting a potential difference (36) between the first ground potential (20) and the second ground potential (32), for shifting a potential (38) of the microcontroller output signal depending on the detected potential difference (36) to output the transceiver input signal (26) and for shifting a potential (40) of the transceiver output signal (28) depending on the detected potential difference (36) to output the microcontroller input signal (16).

The invention further relates to a network System (90), a vehicle comprising a communication device (10) and a method (110) for automotive communication in a vehicle.

## Description

The present invention relates to a communication device for automotive communication systems. Specifically, the present disclosure pertains to a communication device comprising a microcontroller and a bus transceiver to ensure reliable signal transmission and reception within automotive networks.

In the field of automotive communication, it is common to utilize various communication devices to facilitate the exchange of data between different electronic control units (ECUs), sensors and actors within a vehicle. Known systems typically involve the use of microcontrollers and bus transceivers to manage the transmission and reception of signals across communication networks such as Local Interconnect Network (LIN) buses. These systems are designed to ensure reliable communication by converting and transmitting signals between components of the vehicle. However, the presence of multiple ground potentials in a vehicle's electrical system can lead to significant challenges in maintaining signal integrity and ensuring accurate data transmission.

According to known approaches, bus transceivers are used to interface between the microcontroller and the communication bus, translating the microcontroller's signals to the appropriate bus signals and vice versa. These transceivers must account for potential differences between the ground levels of the microcontroller and the bus, which can vary due to the vehicle's complex electrical environment. Despite the substantial advances in the field of automotive communication, existing systems often struggle with issues related to ground potential differences, which can result in signal distortion, communication errors, and reduced overall system reliability. Furthermore, the need to operate at different voltage levels for various components within the communication device adds another layer of complexity to the design and implementation of these systems.

Despite the substantial advances in the field of automotive communication, there remains a need for improved solutions that can effectively manage the challenges associated with ground potential differences and voltage level discrepancies. Current methods may involve complex circuitry and additional components to address these issues, which can increase the cost, size, and power consumption of the communication device.

For instance components to overcome the problems of ground potential differences and voltage level discrepancies are based on galvanic separation which is mainly used for data Interfaces consisting in example of transformers, additional power rails, gate drivers, digital isolators or dedicated PCB design. Such components are often not appropriate in systems with high component density as they are in example not fully automotive certified. Partially, such components correspond to a heavy components that could be problematic during vibration testing. Moreover, galvanic separation can be solved by an optical interface. Such interfaces however are subjected to limitations like lack of automotive qualification components or ratio degradation over time for opto-coupler current transfer.

Additionally, the integration of multiple power sources within a vehicle's network system necessitates a robust mechanism to ensure consistent and accurate signal transmission across varying ground potentials and voltage levels.

It is therefore a technical problem underlying the present invention to provide a communication device for automotive communication that at least partially overcomes the disadvantages of known systems.

It is an object of this invention to provide a communication device for automotive communication that overcomes one or more of the disadvantages of known systems.

According to the present disclosure, these objects are addressed by the features of the independent claim 1 according to a first aspect of the invention. In addition, further advantageous aspects and embodiments follow from the further claims and the description.

In particular, this object is addressed by a communication device for automotive communication that integrates a microcontroller, a bus transceiver, and a shifting module to manage signal integrity between different ground potentials. The microcontroller is responsible for generating an output signal and receiving an input signal, both of which indicate a voltage relative to a first ground potential. This arrangement ensures that the microcontroller can effectively process and generate signals within its designated voltage reference.

The bus transceiver, on the other hand, generates a bus signal based on an input signal influenced by the microcontroller's output and monitors the bus signal to provide an output signal. These signals are referenced to a second ground potential, which is crucial for maintaining signal integrity in automotive environments where multiple ground potentials are common.

The shifting module plays a pivotal role by detecting the potential difference between the first and second ground potentials. The potential difference corresponds to the voltage of the second ground potential with respect to the first ground potential. The shifting module adjusts the potential of the microcontroller's output signal based on this detected difference to produce the transceiver's input signal and similarly shifts the potential of the transceiver's output signal to generate the microcontroller's input signal. This shifting mechanism may help in extending the operational reliability of the communication device by ensuring that signals are accurately referenced to their respective ground potentials, thereby mitigating issues related to ground potential differences.

The design aims to address challenges such as signal distortion and data integrity loss that can arise from ground potential discrepancies in automotive systems. By incorporating these components in a structured manner, the communication device may provide a more accurate and reliable means of automotive communication, ensuring robust performance even in electrically noisy environments.

According to an embodiment, the communication device for automotive communication includes a shifting module that comprises a first amplifier configured as a non-inverting summing amplifier. This first amplifier is arranged to output the transceiver input signal based on the first ground potential, the second ground potential, and the microcontroller output signal supplied to the first amplifier. The inclusion of the first amplifier as a non-inverting summing amplifier enhances the precision and stability of the signal conversion process between the microcontroller and the bus transceiver.

Preferably, the first amplifier is wired in such a way that it receives at least the microcontroller output signal at the input, increases the potential of the microcontroller output signal by the difference, in particular the amount of the difference, between the first and second ground potential and outputs it as the transceiver input signal.

By processing the potentials of the first ground potential, the second ground potential, and the microcontroller output signal, the first amplifier ensures that the transceiver input signal accurately reflects the necessary voltage levels for proper communication, thereby improving the overall reliability and performance of the communication device.

Furthermore, the shifting module also comprises a second amplifier configured as a differential amplifier. This second amplifier is arranged to output the microcontroller input signal based on the first ground potential, the second ground potential, and the transceiver output signal. The differential amplifier configuration of the second amplifier is particularly beneficial for detecting and compensating for any potential differences between the first and second ground potentials. By comparing the voltages from these ground potentials and the transceiver output signal, the second amplifier can accurately shift the potential of the transceiver output signal to match the microcontroller input signal. This ensures that any discrepancies due to ground potential differences are effectively mitigated, thereby maintaining the integrity of the signals being communicated.

Preferably, the second amplifier is so wired that it receives the transceiver output signal at the input, reduces the potential of the transceiver output signal by the difference, in particular the amount of the difference, between the first and second ground potential and outputs it as a microcontroller input signal.

The combination of the non-inverting summing amplifier and the differential amplifier within the shifting module provides a robust mechanism for managing potential shifts and potential differences, ensuring seamless communication between the microcontroller and the bus transceiver. This embodiment significantly enhances the device's capability to handle varying ground potentials, which is crucial in automotive environments where electrical noise and ground potential variations are common. The precise and reliable signal conversion facilitated by these amplifiers ensures that the communication device operates effectively, maintaining accurate and stable communication within the automotive system.

According to a further embodiment, the communication device for automotive communication is specified as a LIN-Interface, which brings a significant enhancement in terms of standardization and compatibility with the Local Interconnect Network (LIN) protocol commonly used in automotive applications.

This specification ensures that the communication device adheres to the LIN protocol standards, which facilitates seamless integration with other LIN-compatible devices and systems within the vehicle's communication network. The LIN-Interface feature implies that the microcontroller, bus transceiver, and shifting module are all configured to operate in accordance with the LIN protocol, thereby ensuring reliable and efficient communication across the automotive network. Furthermore, the bus transceiver is specified as a LIN-transceiver, which further refines the communication capabilities of the device by ensuring that the transceiver is optimized for LIN communication. The LIN-transceiver is designed to handle the specific voltage levels, timing requirements, and data formats associated with LIN communication, thereby enhancing the overall performance and reliability of the communication device. The LIN-transceiver's ability to generate a bus signal based on a transceiver input signal and observe the bus signal to provide a transceiver output signal is particularly crucial in maintaining the integrity and accuracy of data transmission within the LIN network.

Additionally, the shifting module's role in detecting potential differences between the first and second ground potentials and adjusting the potential of the microcontroller output signal and transceiver output signal accordingly is critical in ensuring that the LIN-transceiver operates correctly despite any potential ground offset issues. This feature is particularly important in automotive environments where varying ground potentials can occur due to the complex electrical system of the vehicle. By incorporating a LIN-Interface and a LIN-transceiver, the communication device not only meets the specific requirements of the LIN protocol but also enhances the robustness and reliability of the automotive communication system. This embodiment ensures that the communication device can effectively manage the unique challenges associated with automotive communication, such as ground potential differences and the need for standardized communication protocols, thereby providing a highly reliable and efficient solution for automotive communication networks.

According to a further embodiment, the microcontroller is arranged to be supplied by a microcontroller operation voltage, which is particularly specified to be between 4.5 and 5.5 volts, with a preference for 5 volts. This microcontroller operation voltage is provided depending on the first ground potential, which corresponds to a first negative pole of a first battery. The inclusion of a specified microcontroller operation voltage ensures that the microcontroller receives a stable and consistent power supply, which is critical for reliable performance in automotive communication systems. The first ground potential serves as a reference point for the microcontroller operation voltage, ensuring that the voltage levels are accurately maintained relative to this ground potential.

Furthermore, the microcontroller operation voltage is provided depending on a second operation potential, which corresponds to a second positive pole of a second battery. Preferably, the first battery and the second battery are serially connected to provide a system voltage of 24 volts nominal voltage, more preferably according to ISO 16750-2.

The second operation potential is preferably regulated to provide the microcontroller operation potential, which ensures that the voltage supplied to the microcontroller is stable and within the specified range. This regulation is crucial for protecting the microcontroller from voltage fluctuations that could potentially cause malfunctions or damage. By incorporating these features, the communication device ensures that the microcontroller operates within its optimal voltage range, enhancing the overall reliability and performance of the device.

The specific mechanisms of communication between components include the provision of a stable microcontroller operation voltage, the use of the first ground potential as a reference, and the regulation of the second operation potential. These mechanisms work together to ensure that the microcontroller receives a consistent and stable power supply, which is essential for the reliable generation and reception of microcontroller output and input signals. This further embodiment enhances the robustness of the communication device, making it more suitable for the demanding environment of automotive communication systems, where reliability and stability are paramount.

According to a further embodiment, the bus transceiver is operated with a bus transceiver operation voltage, which is particularly specified to be within the range of 10 to 14 volts, with a preference for an operation voltage of 12 volts, preferably to ensure an electrical physical layer implementation and a logical level of abstraction of LIN according to ISO 17987-4 . This operation voltage is provided depending on the second ground potential, which corresponds to a second negative pole of a second battery. Additionally, the second operation potential corresponds to a second positive pole of the second battery. The inclusion of these features ensures that the bus transceiver operates within a stable and optimal voltage range, which is crucial for maintaining reliable communication within the automotive system. The specification of the operation voltage range between 10 and 14 volts, and more preferably at 12 volts, aligns with common automotive electrical systems, thereby enhancing compatibility and reducing the likelihood of voltage-related issues. By providing the operation voltage depending on the second ground potential, the system ensures that the bus transceiver is correctly referenced to the appropriate ground, which is essential for accurate signal transmission and reception.

The correspondence of the second ground potential to the second negative pole of the second battery and the second operation potential to the second positive pole of the second battery further ensures that the bus transceiver is powered correctly and consistently, in particular with respect to devices, like sensors, powered by the voltage of the second ground potential and second operation potential of the second battery connected to the bus transceiver via a bus. This configuration not only stabilizes the operation of the bus transceiver but also mitigates potential discrepancies that could arise from ground potential differences. Overall, these features contribute to a more robust and reliable communication device by ensuring that the bus transceiver operates within a defined and stable voltage range, is correctly referenced to the appropriate ground potential, and is powered in a manner that aligns with standard automotive electrical systems according to ISO 16750-2 and requirements for standard LIN communication. This enhances the overall performance and reliability of the communication device, making it more suitable for the demanding environment of automotive applications.

According to a further embodiment, the communication device for automotive communication includes a DC-to-DC converter, specifically a low-dropout regulator (LDO), which is provided to regulate the voltage supplied by the second ground potential and the second operation potential to a shifting module operation voltage. This mechanism ensures that the voltage levels are appropriately managed and stabilized, which is crucial for the reliable operation of the shifting module. The inclusion of a DC-to-DC converter, particularly an LDO, enhances the device's ability to maintain a consistent voltage level, thereby improving the overall stability and performance of the communication system. The shifting module operation voltage is specified to be between 4.5 volts and 5.5 volts, with a preferred value of 5 volts. This specific voltage range is critical as it ensures that the shifting module operates within its optimal parameters, thereby enhancing the accuracy and reliability of the voltage shifting process.

The precise regulation of the shifting module operation voltage by a DC-to-DC converter is essential for maintaining the integrity of the signals being processed and transmitted between the microcontroller and the bus transceiver. Furthermore, the shifting module operation voltage is preferably defined as the voltage between the second ground potential and a shifting module potential.

By maintaining a consistent shifting module operation voltage, the communication device can effectively manage potential discrepancies and ensure seamless communication between the microcontroller and the bus transceiver. The integration of these features into the communication device enhances its robustness and reliability, making it well-suited for the demanding environment of automotive communication.

The regulated voltage provided by the DC-to-DC converter ensures that the shifting module can perform its function of detecting potential differences and shifting potentials with high precision, thereby maintaining the integrity of the communication signals. This embodiment highlights the importance of voltage regulation and stabilization in the design of advanced automotive communication devices, ensuring that they can operate reliably under varying conditions and provide consistent performance.

Further, the invention is directed to a network system according to a second aspect. The network system comprises a communication device for automotive communication according to the first aspect.

The network system further comprises a first battery, preferably a 12V battery, and a second battery, preferably a 12V battery. A system voltage of 24 volts can be achieved with standardized two, namely a first and a second, 12V batteries.

According to an embodiment, the first ground potential is the first negative pole of the first battery, and the second ground potential is the second negative pole of a second battery. This embodiment introduces a more defined and practical implementation of the ground potentials within the network system. By explicitly designating the first ground potential as the first negative pole of the first battery, it ensures that the microcontroller's output and input signals are referenced to a stable and consistent ground potential, which is critical for accurate signal generation and reception. Similarly, defining the second ground potential as the second negative pole of a second battery ensures that the bus transceiver's input and output signals are also referenced to a stable and consistent ground potential.

This dual-battery configuration can be particularly advantageous in automotive applications where different subsystems may operate on separate power sources, thereby necessitating a reliable method to manage potential differences between these subsystems. The shifting module's role becomes even more crucial in this context, as it must accurately detect and compensate for the potential difference between the two distinct ground potentials. This ensures that the potential of the microcontroller output signal is appropriately shifted to produce the transceiver input signal, and similarly, the potential of the transceiver output signal is shifted to produce the microcontroller input signal. The introduction of these specific ground potentials enhances the robustness of the communication device by mitigating issues related to ground loops and potential differences that can arise in complex automotive electrical systems. Furthermore, this configuration can improve the overall reliability and performance of the communication device by ensuring that signal integrity is maintained across different subsystems powered by separate batteries.

According to a further embodiment, the communication device for automotive communication is integrated into a network system that includes a first battery and a second battery, where the first operation potential of the first battery is connected with the second negative pole of the second battery. This configuration introduces a dual-battery system that enhances the robustness and reliability of the communication device.

By connecting the first operation potential of the first battery with the second negative pole of the second battery, the system ensures that the communication device can operate effectively even in scenarios where there are variations in the ground potentials.

This dual-battery setup provides a stable and consistent power supply, reducing the likelihood of communication errors caused by voltage fluctuations. Additionally, this configuration can help in isolating different parts of the automotive communication system, thereby minimizing the risk of interference and ensuring more reliable data transmission.

According to a further embodiment, the communication device for automotive communication is integrated into a network system, which includes a bus, which serves as a critical communication pathway for transmitting signals between various components within the automotive environment. The inclusion of a bus facilitates the seamless exchange of data, ensuring that the microcontroller and bus transceiver can effectively communicate with other devices connected to the network. The bus in this embodiment is preferably identified as a LIN-bus, which stands for Local Interconnect Network. The LIN-bus is a widely recognized standard in the automotive industry, known for its cost-effectiveness and simplicity in facilitating communication between sensors, actuators, and other control devices within the vehicle.

By specifying that the bus is a LIN-bus, the embodiment ensures compatibility with existing automotive communication protocols, thereby enhancing the device's utility and ease of integration into current vehicular systems. Furthermore, the communication device is directly connected to the bus, establishing a direct line of communication that allows for real-time data exchange and signal processing. This direct connection ensures that the microcontroller can generate and receive signals that are accurately interpreted and acted upon by the bus transceiver, which in turn communicates with other networked components via the LIN-bus.

According to a further embodiment, the communication device of the network system is designated as a master node within the network system. This designation as a master node introduces a hierarchical structure to the network, where the master node assumes a central role in managing and coordinating communication among various nodes. The master node is responsible for initiating communication sequences, managing data flow, and ensuring synchronization across the network. This hierarchical structure enhances the efficiency and reliability of the communication system by centralizing control and reducing the likelihood of data collisions and communication errors. The master node's ability to manage the network also allows for more sophisticated communication protocols and error-handling mechanisms, thereby improving the overall performance and robustness of the automotive communication system.

According to a further embodiment, the network system comprises at least one communication node that functions as a sensor and/or a slave node connected to the bus. This extension of the network system introduces a more complex and versatile communication architecture, enhancing the overall functionality and adaptability of the system. The inclusion of at least one communication node, which can be a sensor or a slave node, allows for the collection and transmission of additional data points, thereby enriching the data pool available for processing and decision-making within the automotive communication network. The sensor, as a communication node, can detect various parameters such as temperature, pressure, or speed, and transmit this data via the bus to the microcontroller. This data is then processed by the microcontroller to generate appropriate output signals, which are subsequently managed by the bus transceiver and shifting module to maintain accurate communication despite potential differences between ground potentials.

The slave node, on the other hand, can perform specific tasks as directed by the microcontroller, such as actuating a component or relaying information from one part of the network to another. The communication between these components is facilitated through the bus, which acts as a conduit for signals generated by the microcontroller and processed by the bus transceiver. The shifting module plays a crucial role in ensuring the integrity of these signals by adjusting their potential based on detected potential differences, thereby maintaining reliable communication across the network. This interconnected system allows for a more dynamic and responsive automotive communication network, capable of adapting to various operational conditions and requirements

According to a further embodiment, the communication node is a sensor and/or a slave node of a battery management system (BMS) which is connected to the second negative pole and the second positive pole and arranged to monitor the second battery, wherein the communication node is preferably powered by the second battery. A standardized communication with the communication node is possible, although it has a different reference potential than the rest of the system.

According to a further embodiment the system comprises a second communication node which is a sensor and/or a slave node of a second battery management system (BMS) which is connected to the first negative pole and the first positive pole. The second communication node is arranged to monitor the second battery. The second communication node is connected to a further bus transceiver different from the bus transceiver. The second communication node is connected to the further bus transceiver via a further bus different from the above bus for communication between the communication node and the bus transceiver. The second communication node is preferably powered by the first battery.

Further, the invention pertains to a vehicle according to a third aspect. The vehicle incorporates a communication device for automotive communication according to the first aspect or a network system according to the second aspect.

Further, the invention encompasses a method for automotive communication in a vehicle according to a fourth aspect, which introduces several specific mechanisms of communication between components and enhances the functionality of the communication device.

The method comprises steps executed by a communication device according to the first aspect. The first step involves detecting a potential difference between a first ground potential and a second ground potential. This detection is crucial as it allows the system to identify discrepancies in ground levels that could affect signal integrity and communication reliability. The second step involves shifting the potential of a microcontroller output signal based on the detected potential difference to produce a transceiver input signal. This shifting mechanism ensures that the signal generated by the microcontroller is appropriately adjusted to account for any ground potential differences, thereby maintaining the accuracy and consistency of the signal as it is transmitted to the bus transceiver. The third step involves shifting a transceiver output signal, again based on the detected potential difference, to produce a microcontroller input signal. This step ensures that the signal observed by the bus transceiver and subsequently provided as an output is correctly adjusted before being fed back into the microcontroller.

By incorporating these steps, the method enhances the robustness of the communication device by ensuring that all signals are accurately adjusted for any ground potential differences, thereby improving the overall reliability and performance of automotive communication systems. This method not only addresses potential issues related to ground potential discrepancies but also ensures seamless communication between the microcontroller and the bus transceiver, thereby enhancing the device's ability to manage and process signals effectively within an automotive environment. The introduction of these steps provides a systematic approach to managing potential differences, thereby ensuring that the communication device operates efficiently and reliably under varying ground potential conditions.

The present disclosure will be explained in more detail, by way of example, with reference to the drawings in which:
- Figure 1:: shows an embodiment of a network system comprising various components including a microcontroller, bus transceiver, shifting module, batteries, and a bus,
- Figure 2:: shows an embodiment of a shifting module with a first amplifier configured as a non-inverting summing amplifier,
- Figure 3:: shows an embodiment of a shifting module with a second amplifier configured as a differential amplifier, and
- Figure 4:: shows an embodiment of the steps of the method.

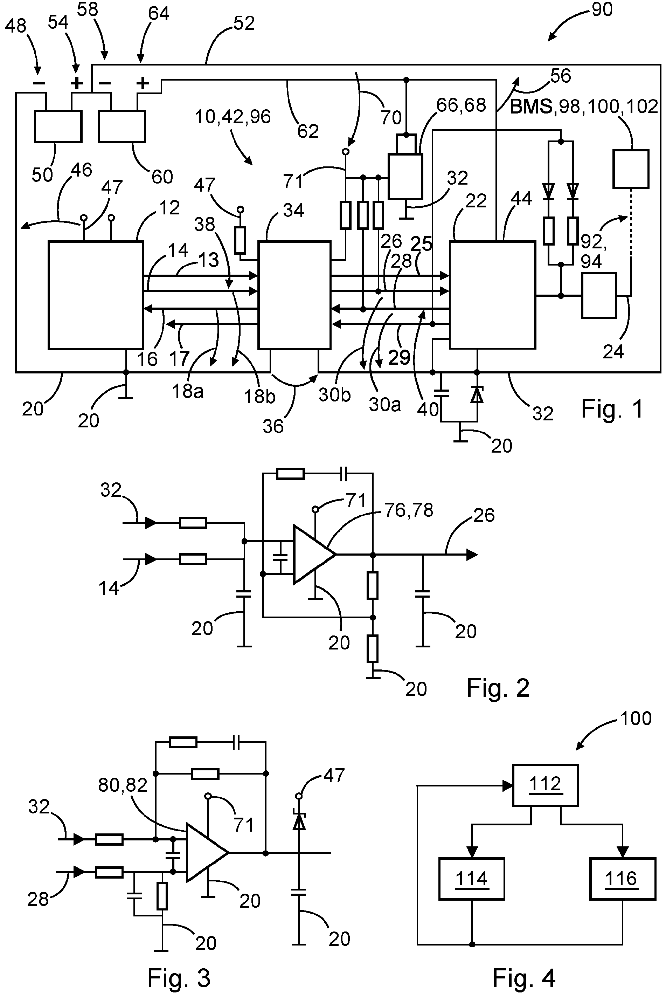

Figure 1 illustrates an embodiment of a communication device 10 for automotive communication. The device comprises a microcontroller 12, which generates a microcontroller output signal 14 and receives a microcontroller input signal 16. These signals indicate voltages 18a and 18b with respect to a first ground potential 20. The bus transceiver 22 generates a bus signal 24 based on a transceiver input signal 26, which is dependent on the microcontroller output signal 14. The bus transceiver 22 also observes the bus signal 24 to provide a transceiver output signal 28, which indicates a voltage 30a and 30b relative to a second ground potential 32.

The shifting module 34 detects a potential difference 36 between the first ground potential 20 and the second ground potential 32. The potential difference 36 corresponds to the voltage 36 of the second ground potential 32 to the first ground potential 20. The shifting module 34 shifts the potential 38 of the microcontroller output signal 14 based on the detected potential difference 36 to output the transceiver input signal 26. Similarly, it shifts the potential 40 of the transceiver output signal 28 based on the detected potential difference 36 to output the microcontroller input signal 16.

Consequently, the microcontroller 12 is arranged to provide a massage to a communication node connected to the bus. The message is output as the microcontroller output signal 14 which is preferably a digital signal, more preferably a binary digital signal, which preferably encodes a message or data by alternating low and high levels of a potential and thus a voltage 18b with respect to the first ground potential 20. The microcontroller output signal 14 is modified by the shifting module 34. The modification comprise for example to shift the low and high levels of the potential of the microcontroller output signal 14 by adding a potential corresponding to the potential difference 36. The modified signal will be output as the transceiver input signal 26. The bus transceiver 22 outputs the message as a bus massage on the connected bus.

Preferably, the bus transceiver 22 is in a sleep mode, when no communication is executed on the bus. However to wake up the bus transceiver 22 from the sleep mode when the microcontroller intends to send a message, a microcontroller output enable signal 13 is further provided by the microcontroller. The potential of the microcontroller output enable signal 13 is modified in the same way as the microcontroller output signal 14 by the shifting module 34 and output as a transceiver enable signal 25 from the shifting module 34 to the bus transceiver 22 to wake up the bus transceiver 22 from a sleep mode.

Further, the microcontroller 12 is arranged to receive a massage from a communication node connected to the bus. The message is input into microcontroller 12 as the microcontroller input signal 16 which is preferably a digital signal, more preferably a binary digital signal, which preferably encodes the message by alternating low and high levels of a potential and thus the voltage 18a with respect to the first ground potential 20. The microcontroller input signal 16 is provided by the shifting module 34 after modification of the transceiver output signal 28 provided by the bus transceiver 22. The modification comprise for example to shift low and high levels of the potential of the transceiver output signal 28 by subtract a potential corresponding to the potential difference 36. The modified signal will be output as the microcontroller input signal 16 to the microcontroller.

The bus transceiver 22 provides the transceiver output signal 28 when a message is received from the bus in the form of a bus signal 24. Preferably, the bus transceiver 22 thus also wakes up from the sleep mode, when a message is received from the bus. In such a case, the bus transceiver 22 outputs, preferably before providing the transceiver output signal 28, a bus transceiver wait output signal 29. The bus transceiver wait output signal 29 is modified, namely shifted, by the shifting module 34, preferably in the same way as the transceiver output signal 28 and output as a microcontroller wait signal 17 to the microcontroller 12. The wait signal 17 can either wake up the microcontroller 12, if in sleep mode, and/or bring the microcontroller in a wait state to prevent the microcontroller 12 from outputting a new message in the form of a microcontroller output signal 14 to be sent on the bus in order avoid collision on the bus.

The microcontroller 12 is supplied by a microcontroller operation voltage 46, typically between 4.5 and 5.5 volts, preferably 5 volts, provided depending on the first ground potential 20, corresponding to a first negative pole 48 of a first battery 50, and a an operation potential 52, corresponding to a second positive pole 64 of a second battery 60.

The bus transceiver 22 operates with a bus transceiver operation voltage 56, typically between 8 and 14 volts, preferably 12 volts, provided depending on the second ground potential 32, corresponding to a second negative pole 58 of a second battery 60, and a second operation potential 62, corresponding to a second positive pole 64 of the second battery 60.

A DC-to-DC converter 66, specifically a low-dropout regulator LDO 68, regulates the voltage 56 provided by the second ground potential 32 and the second operation potential 62 to a shifting module operation voltage 70, typically between 4 volts and 6 volts, preferably 5 volts, corresponding to a voltage between the second ground potential 32 and a shifting module operation potential 71.

The communication device 10 can be a LIN-Interface 42, with the bus transceiver 22 being a LIN-transceiver 44. The communication device 10 is part of a network system 90, as shown in Figure 1. The network system 90 includes the communication device 10, the first battery 50, and the second battery 60. The first ground potential 20 is the first negative pole 48 of the first battery 50, and the second ground potential 32 is the second negative pole 58 of the second battery 60. The first operation potential 52 of the first battery 50 is connected to the second negative pole 58 of the second battery 60.

The network system 90 further includes a bus 92, specifically a LIN-bus 94, to which the communication device 10 is connected. The communication device is for example a master node 96. However, the communication device can also be a slave node depending on the configuration, especially on pull-up resistor according to another embodiment not shown. Additionally, the network system 90 comprises at least one communication node 98, which can be a sensor 100 and/or a slave node 102 connected to the bus 92. The communication node 98 operates with the voltage 56 derived from the second battery 60. The communication node 98 is a sensor 100 and/or a slave node 100 of a battery management system BMS which is connected to the second negative pole 58 and the second positive pole 64 and arranged to monitor the second battery 60. Connections between the communication node 98 and the second battery 60 are not shown in figure 1 for a better overview.

Figure 2 details the shifting module 34, which includes a first amplifier 76 configured as a non-inverting summing amplifier 78. The first amplifier 76 outputs the transceiver input signal 26 based on the first ground potential 20, the second ground potential 32, and the microcontroller output signal 14 supplied to the first amplifier 76.

Figure 3 shows the second amplifier 80, configured as a differential amplifier 82. The second amplifier 80 outputs the microcontroller input signal 16 based on the first ground potential 20, the second ground potential 32, and the transceiver output signal 28.

Figure 4 shows the steps of the method 110 according to an embodiment. In a step 112 a potential difference between a first ground potential and a second ground potential is detected. Further, according to the method in a step 114 a potential of a microcontroller output signal is shifted depending on the detected potential difference to output a transceiver input signal. In step 116 a potential of transceiver output signal is shifted depending on the detected potential difference to output a microcontroller input signal.

### List of reference signs (Part of the description)

- 12: Microcontroller
- 13: Microcontroller output enable signal
- 14: Microcontroller output signal
- 16: Microcontroller input signal
- 17: Microcontroller wait signal 17
- 18a, 18b: Voltages
- 20: First ground potential
- 22: Bus transceiver
- 24: Bus signal
- 25: Transceiver enable signal
- 26: Transceiver input signal
- 28: Transceiver output signal
- 29: Transceiver wait output signal
- 30a, 30b: Voltages
- 32: Second ground potential
- 34: Shifting module
- 36: Potential difference
- 38: Potential of microcontroller output signal
- 40: Potential of transceiver output signal
- 42: LIN-Interface
- 44: LIN-transceiver
- 46: Microcontroller operation voltage
- 47: Microcontroller operation potential
- 48: First negative pole
- 50: First battery
- 52: First operation potential
- 54: First positive pole
- 56: Bus transceiver operation voltage
- 58: Second negative pole
- 60: Second battery
- 62: Second operation potential
- 64: Second positive pole
- 66: DC-to-DC-converter
- 68: Low-dropout regulator
- 70: Shifting module operation voltage
- 71: Shifting module potential
- 76: First amplifier
- 78: Non-inverting summing amplifier
- 80: Second amplifier
- 82: Differential amplifier
- 90: Network System
- 92: Bus
- 94: LIN-bus
- 96: Master node
- 98: Communication node
- 100: Sensor
- 102: Slave node
- BMS: Battery management system
- 110: Method
- 112-116: Method steps

## Claims

1. Communication device (10) for automotive communication, comprising
- a microcontroller (12) for generating a microcontroller output signal (14) and receiving a microcontroller input signal (16),
wherein the microcontroller output signal and the microcontroller input signal respectively indicate a voltage (18a, 18b) with respect to a first ground potential (20)
- a bus transceiver (22) for generating a bus signal (24) depending on a transceiver input signal (26) which depends on the microcontroller output signal (14) and observing the bus signal (24) for providing a transceiver output signal (28) depending on the bus signal (24),
wherein the transceiver input signal (26) and the transceiver output signal (28) respectively indicate a voltage (30a, 30b) to a second ground potential (32),
- a shifting module (34) for detecting a potential difference (36) between the first ground potential (20) and the second ground potential (32), for shifting a potential (38) of the microcontroller output signal depending on the detected potential difference (36) to output the transceiver input signal (26) and for shifting a potential (40) of the transceiver output signal (28) depending on the detected potential difference (36) to output the microcontroller input signal (16).

2. Communication device (10) according to claim 1, wherein the shifting module comprises a first amplifier (76) configured as a non-inverting summing amplifier (78),
wherein the first amplifier (76) is arranged to output the transceiver input signal (26) depending on the first ground potential (20), the second ground potential (32) and the microcontroller output signal (14) supplied to the first amplifier (76),
and a second amplifier (80) configured as a differential amplifier (82), wherein the second amplifier (80) is arranged to output the microcontroller input signal (16) depending on the first ground potential (20), the second ground potential (32) and the transceiver output signal (28).

3. Communication device (10) according to claim 1 or 2, wherein the communication device (10) is a LIN-Interface (42) and the bus transceiver (22) is a LIN-transceiver (44).

4. Communication device (10) according to any of the previous claims, wherein the microcontroller (12) is arranged to be supplied by a microcontroller operation voltage (46), in particular between 4.5 and 5.5 volts, preferably 5 volts, provided depending on the first ground potential (20), corresponding to a first negative pole (48) of a first battery (50), and a second operation potential (62), corresponding to a second positive pole (64) of a second battery (60), wherein the first operation potential (62) is preferably regulated to provide a microcontroller operation potential (47).

5. Communication device (10) according to any of the previous claims, wherein the bus transceiver (22) is operated with a bus transceiver operation voltage (56), in particular between 8 and 14 volts, preferably 12 volts, provided depending on the second ground potential (32), corresponding to a second negative pole (58) of the second battery (60), and the second operation potential (62).

6. Communication device (10) according to any of the previous claims, wherein a DC-to-DC-converter (66), in particular a low-dropout regulator (LDO) (68), is provided to regulate the voltage (56) provided by the second ground potential (32) and the second operation potential (62) to a shifting module operation voltage (70), in particular between 4 volts and 6 volts, preferably 5 volts, corresponding preferably to a voltage (70) between the second ground potential (32) and a shifting module potential (71) .

7. Network System (90) comprising a communication device (10) according to any of the previous claims and a first battery (50) and a second battery (60).

8. Network System (90) according to claim 7, wherein the first ground potential (20) is the first negative pole (48) of the first battery (50) and the second ground potential (32) is the second negative pole (58) of a second battery (60).

9. Network System (90) according to any of claims 7 to 8, further comprising a bus (92), in particular a LIN-bus (94), wherein the communication device (10) is connected to the bus (92).

10. Network System (90) according to any of claims 7 to 9, wherein the communication device is a master node (96).

11. Network System (90) according to any of claims 7 to 10, further comprising at least one communication node (98) which is a sensor (100) and/or a slave node (102) connected to the bus 92.

12. Network System (90) according to claim 11, wherein the communication node (98) is a sensor (100) and/or a slave node (102) of a battery management system (BMS) which is connected to the second negative pole (58) and the second positive pole (64) and arranged to monitor the second battery (60).

13. Network System (90) according to claim 11 or 12, wherein the system comprises a second communication node (98) which is a sensor (100) and/or a slave node (102) of a second battery management system (BMS) which is connected to the first negative pole (48) and the first positive pole (54) and arranged to monitor the second battery (50), wherein the second communication node is connected to a further bus transceiver different from the bus transceiver (22).

14. Vehicle, comprising a communication device (10) according to any of the claims 1 to 8 or a Network System (90) according to any of claims 10 to 13.

15. Method (110) for automotive communication in a vehicle, comprising the steps, executed by a communication device according to any of the previous claims:
- detecting a potential difference between a first ground potential and a second ground potential,
- shifting a potential of a microcontroller output signal depending on the detected potential difference to output a transceiver input signal and
- shifting a transceiver output signal depending on the detected potential difference to output a microcontroller input signal.
